Europäisches Patentamt

European Patent Office

Office européen des brevets

(19)

(11) Veröffentlichungsnummer: **0 214 323 B1**

(12) **EUROPÄISCHE PATENTSCHRIFT**

(45) Veröffentlichungstag der Patentschrift: 05.06.91

(51) Int. Cl.⁵ **B60C 25/132**

(21) Anmeldenummer: 85111131.0

(22) Anmeldetag: 04.09.85

(54) **Verfahren zur Montage oder Demontage eines Fahrzeugluftreifens sowie Vorrichtung zur Durchführung des Verfahrens.**

(43) Veröffentlichungstag der Anmeldung:
18.03.87 Patentblatt 87/12

(45) Bekanntmachung des Hinweises auf die Patenterteilung:
05.06.91 Patentblatt 91/23

(84) Benannte Vertragsstaaten:
**BE DE IT**

(56) Entgegenhaltungen:
EP-A- 0 141 164
EP-A- 0 151 303
EP-A- 0 154 715
EP-A- 0 191 367
DE-A- 3 330 316

(73) Patentinhaber: **Schenck Auto-Service-Geräte GmbH**
**Landwehrstrasse 63 Postfach 4129**
**W-6100 Darmstadt(DE)**

(72) Erfinder: **Weiden, Michael, Ing.-grad.**
**Berliner Strasse 14**
**W-6101 Messel(DE)**

(74) Vertreter: **Dallhammer, Herbert, Dipl.-Ing.**
**c/o Schenck-Auto-Service-Geräte GmbH Patentabteilung Postfach 4129 Landwehrstrasse 63**
**W-6100 Darmstadt(DE)**

## Beschreibung

Verfahren zur Montage oder Demontage eines Fahrzeugluftreifens sowie Vorrichtung zur Durchführung des Verfahrens

Die Erfindung betrifft ein Verfahren zur Montage oder Demontage eines Fahrzeugluftreifens dessen Wülste sich im montierten Zustand am radial inneren Umfang der Felge befinden, sowie eine Vorrichtung wobei zur Montage eines Fahrzeugluftreifens mit Wülsten auf eine mit einem drehbaren Montageteller verbundene Felge der Fahrzeugluftreifen die Felge lose umschließt und wobei während der Montage eine an einem Arm angeordnete drehbare Rolle mit dem Wulst der einen Reifenseite in Wirkverbindung bringbar ist und der Arm sich an einer Säule abstützt und bei der mindestens der Montageteller angetrieben wird, wobei eine Führungsrolle mit zwei Flanken vorgesehen ist, deren erste Flanke als Kegelstumpf ausgebildet ist, dessen Achse mit der Achse der Führungsrolle zusammenfällt und dessen Ursprung in Richtung der zweiten Flanke liegt.

Durch die Offenlegungsschrift DE-A-33 34 203 ist eine Vorrichtung der oben beschriebenen Art bekannt geworden, dei der zusätzlich ein Montagehilfsmittel nach Einbringen eines Teils des Reifenwulstes in ein Hochbett den Reifenwulst festhält. Nach dem Festhalten des Reifenwulstes erfolgt das Montieren des Reifens mittels einer angetriebenen Rolle, die im Betrieb im Wulstbereich des Reifens angreift und deren Umfangsgeschwindigkeit größer ist als die Abrollgeschwindigkeit am Reifen. Eine derartige Montage eines Fahrzeugluftreifens dessen Wülste sich im montierten Zustand am radial inneren Umfang der Felge befinden, verlangt zwingend zwei Arbeitsgänge und zwar den des Festhaltens und den des Montierens bei festgehaltener Wulststelle an der Felge. Wird in diesem Falle der Montageteller mit angetrieben, so muß die Festhalteeinrichtung und die Montiereinrichtung im Zentrum des Montiertellers drehbar angeordnet sein. Dies führt beim Einlegen eines zu montierenden Reifens, der die Felge lose umfaßt zu Schwierigkeiten. Insbesondere kann an den zentral angeordneten drehbaren Festhalteeinrichtungen oder an der drehbaren Montageeinrichtung der Reifen und die Felge verhaken. Dies führt zwangsläufig zu einer aufwendigen Beschickung einer derartigen Montagevorrichtung. Darüberhinaus greifen bei einer derartigen Montage beachtliche Kräfte am Wulstbereich des Kraftfahrzeugluftreifens an, die dann noch vermehrt zu einer Beschädigung der Wülste führen können, wenn die Mantelflächen der Montagerolle noch eine Profilierung aufweisen.

Die europäische Anmeldung EP-A-0191367 welche am 20.8.86 veröffentlicht wurde, offenbahrt eine weitere Vorrichtung der eingangs genannten Art, bei der eine Führungsrolle vorgesehen ist, jedoch wird dort ein zusätzliches Festhalten des zu montierenden Reifens unbedingt gefordert.

Ausgehend hiervon liegt der vorliegenden Erfindung die Aufgabe zugrunde, ein Montage- und Demontageverfahren sowie eine Vorrichtung in Vorschlag zu bringen, wobei durch elastische Veränderung des Wulstbereiches und der im Wulst enthaltenen Seile ein Einbringen bzw. ein Lösen des Wulstes in eine bzw. von einer an der radial inneren Seite der Felge umlaufende bzw. umlaufenden Nut ermöglicht wird. Das erfinderische Verfahren löst diese Aufgabe mit den Verfahrensschritten des elastischen Einbeulens des Reifenwulstes einschließlich der im Wulst enthaltenen Stahlseile, ohne zusätzliches Festhalten des Reifens allein durch eine Krafteinwirkung in Sekantenrichtung, wie es im Kennzeichen des Anspruchs 1 unter Schutz gestellt wird. Durch das elastische Einbeulen des Wulstdurchmessers an einer Stelle wird der augenblickliche Wulstdurchmesser soweit verringert, daß er kleiner als der innere Fegen-durchmesser wird und somit in die umlaufende Nut einlaufen kann, ohne daß eine Quetschung im Wulstbereich auftritt.

Eine Ausgestaltung des erfinderischen Verfahrens wird mit den kennzeichnenden Merkmalen des Anspruchs 2 unter Schutz gestellt. Durch das Fortschreiten der Kraftwirkung zufolge Relativgeschwindigkeit zwischen Reifen und Felge wird eine fortlaufende in radialer Richtung wirkende Verkleinerung des Durchmessers erzielt, so daß der zu montierende Reifen je Seite mit seinem Wulst in die umlaufende Nut einläuft. Durch die in Richtung einer Sekante wirkende und umlaufende Kraft am Wulst wird eine fortlaufende in radialer Richtung wirkende Verkleinerung des Durchmessers erzielt, so daß der zu montierende Reifen je Seite mit seinem Wulst in die umlaufende Nut einläuft. Bei der Demontage des Reifens von der Felge wird ebenfalls durch die umlaufende Kraft eine Einbeulung erreicht, die zwangsläufig den Wulstdurchmesser in radialer Richtung verkleinert, so daß an dieser Stelle der Wulst von der umlaufenden Nut freikommt und mit einem Hilfsmittel der Wulst über den radial inneren Umfang aus der Nut herausgeführt wird. Der Verfahrensschritt des Einbeulens wird erfindungsgemäß noch verstärkt, wenn die umlaufende Kraft eine Differenzgeschwindigkeit zu dem montierenden Reifen besitzt und beide gleichsinnig bewegt werden.

Ausgehend von einer Vorrichtung, wie sie im Oberbegriff des Anspruchs 3 zur Durchführung des Verfahrens nach Anspruch 1 oder 2 offenbart ist, zeigen die erfinderischen Merkmale des Kennzeichens wie durch balliges Ausbilden der zweiten Flanke, also konvexes Ausgestalten des wesentlichen Teils der zweiten Flanke, und durch die Verbindung der beiden Flanken mittels Kehlung zwischen den beiden Flanken das Raumangebot, das der zu montierende Wulst zum Einbeulen in Richtung auf die Drehachse des Rades benötigt geschaffen wird. Weiterhin daß durch Stellung des balligen Bereichs der Führungsrolle in Sekantenrichtung zum radial inneren Ring des Wulstes bei gleichsinniger Drehung von Montageteller und der Führungsrolle ein Einbeulen bewirkt wird. Besitzt die Führungsrollebevorzugt eine Differenzgeschwindigkeit zu der Drehgeschwindigkeit des Montagetellers, wird zusätzlich eine weitere Differenzgeschwindigkeit zwischen dem radial inneren Ring des Wulstes und dem axialen Teil des Wulstes erzeugt. Diese Differenzgeschwindigkeit wird dadurch erzeugt, daß die konvexe Flanke einen größeren Abstand von der Führungsrollenachse aufweist, als die Kegelstumpfflanke der Führungsrolle. Durch diese Differenzgeschwindigkeit wird bewirkt, daß durch ein Voreilen der konvexen Flanke eine Kraft auf den radial inneren Ring des Wulstes ausgeübt wird, die bewirkt, daß der Wulst selbst einschließlich der in ihm enthaltenen Stahlseile in Richtung auf die Drehachse des Reifens elastisch verformt und in den Kehlbereich zwischen den beiden Flanken hineingezogen wird. Hierdurch wird wie bereits beim Verfahren offenbart, bei einer Umdrehung des zu montierenden Reifens und durch die Rotation der Führungsrolle eine umlaufende Einbeulung erreicht, die es dem Reifenwulst ermöglicht, in die am radial inneren Umfang der Felge befindliche Nut einzulaufen. Durch Anordnen der Führungsrolle, wie in Anspruch 3 weiter unter Schutz gestellt, an einem drehbaren Arm, der sich an einer Säule abstützt, die außerhalb des Drehkreises des zu montierenden Reifens befestigt ist und wobei die am Arm angeordnete Führungsrolle in horizontaler und vertikaler Richtung um die Säule schwenkbar ist und die Schwenkung in vertikaler Richtung mit vorgebbarer Kraft arretierbar ist, bildet zufolge der Arretierung mit vorgebbarer Kraft in vertikaler Richtung die Führungsrolle selbst eine Niederhaltevorrichtung, ohne daß ein zusätzliches Arretieren in radialer Richtung erforderlich wird.

Die in Anspruch 4 unter Schutz gestellte Ausgestaltung zeigt eine Erweiterung der konvexen Flanke durch einen Kegelbereich, der sich an die Kehlung anschließt und wobei der Öffnungswinkel der beiden Flanken größer als 90° ist. Hierdurch wird das Freiraumangebot und die Geschwindigkeitsdifferenz zwischen radial innerem Ring des Wulstes und axialem Bereich des Wulstes noch vergrößert, so daß eine noch einfachere Montage bzw. Demontage ermöglicht wird.

Beim Demontieren des auf einer Felge montierten Reifens wird nach Festhalten der Felge auf dem Montageteller die Führungsrolle wie beim Montieren an einer Stelle des Reifenwulstes angesetzt und mit einer bestimmten Vorlast in vertikaler Richtung arretiert, so daß der konvexe Bereich der einen Flanke mit dem radial inneren Ring des Wulstes in Wirkverbindung kommt und die kegelige Flanke mit dem axialen Teil des Reifenwulstes. Durch Rotation mit der oben definierten Differenzgeschwindigkeit zufolge größeren Abstandes des konvexen Teiles der einen Flanke von der Drehachse der Führungsrolle wird ein Hereinziehen des Wulstes in den Freiraum bewirkt. Hierdurch ergibt sich eine elastische Einbeulung und ein Abheben des Reifenwulstes von der umlaufenden Nut. Durch Einführen eines Demontierwerkzeugs in die so entstehende Öffnung zwischen umlaufender Nut und Wulst wird die Möglichkeit geschaffen, über das Demontierwerkzeug den Wulst aus der Nut zufolge elastischen Einbeulens herauslaufen zu lassen.

Anspruch 5 offenbart eine andere Vorrichtung zur Durchführung des Verfahrens, die sich durch die Ausgestaltung der Führungsrolle unterscheidet Diese Führungsrolle ist besonders geeignet für die Montage von Reifen, bei denen die jeweilige Flanke mit der Lauffläche des Reifens einen Winkel zwischen 90° und 180° einschließt bzw. bei Reifen, bei denen die Seitenflanke besonders steif ausgebildet ist und einen beachtlichen Widerstand einem Einbringen des Reifenwulstes in die umlaufende Nut der Felge entgegensetzt.

Durch diese Ausgestaltung der Führungsrolle wird auch die Wirkung des Niederhaltens weiter verstärkt, so daß ein zusätzliches Arretieren der Führungsrolle in radialer Richtung entfallen kann.

Eine noch weitere Ausgestaltung des Erfindungsgegenstandes wird mit Anspruch 6 unter Schutz gestellt.

Mit Anspruch 7 wird eine an der Säule angeordnete Einrichtung unter Schutz gestellt, die die vertikale Bewegung der Führungsrolle und deren Halterung am Reifenwulst des zu montierenden oder zu demontierenden Reifens betrifft.

Mit den Ansprüchen 8 und 9 werden Arretiervorrichtungen für Kraftfahrzeugfelgen unter Schutz gestellt, bei denen eine Beschädigung des zu montierenden bzw. zu demontierenden Reifens bei sicherem Festhalten der Kraftfahrzeugfelge ausgeschlossen ist.

In der nachfolgenden Zeichnung wird die Erfindung näher erläutert. Es zeigen in schematischer Darstellung:

Figur 1 einen Schnitt durch eine Vorrichtung, bei der eine Führungsrolle gegenüber einer Felge auf die ein Reifen montiert oder von dieser demontiert werden soll eine Differenzgeschwindigkeit aufweist

Figur 2 eine Draufsicht auf eine Vorrichtung nach Figur 1

Figur 3 einen Schnitt durch eine Führungsrolle

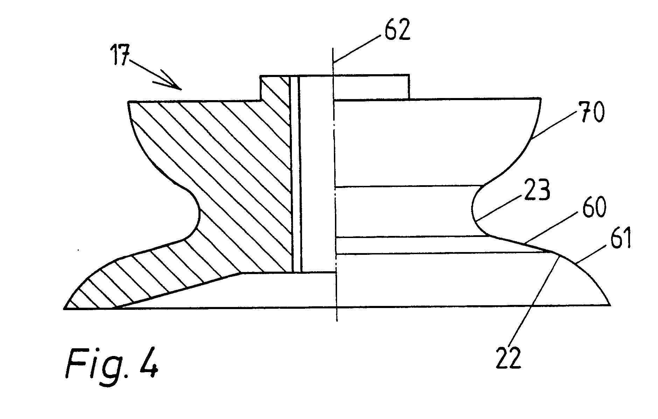

Figur 4 einen Schnitt durch eine andere Führungsrolle

Figur 5 in vergrößertem Maßstab, das Zusammenwirken zwischen Führungsrolle, Felge und Reifen

Gleiche Bauteile werden in den verschiedenen Figuren mit den selben Bezugsziffern bezeichnet.

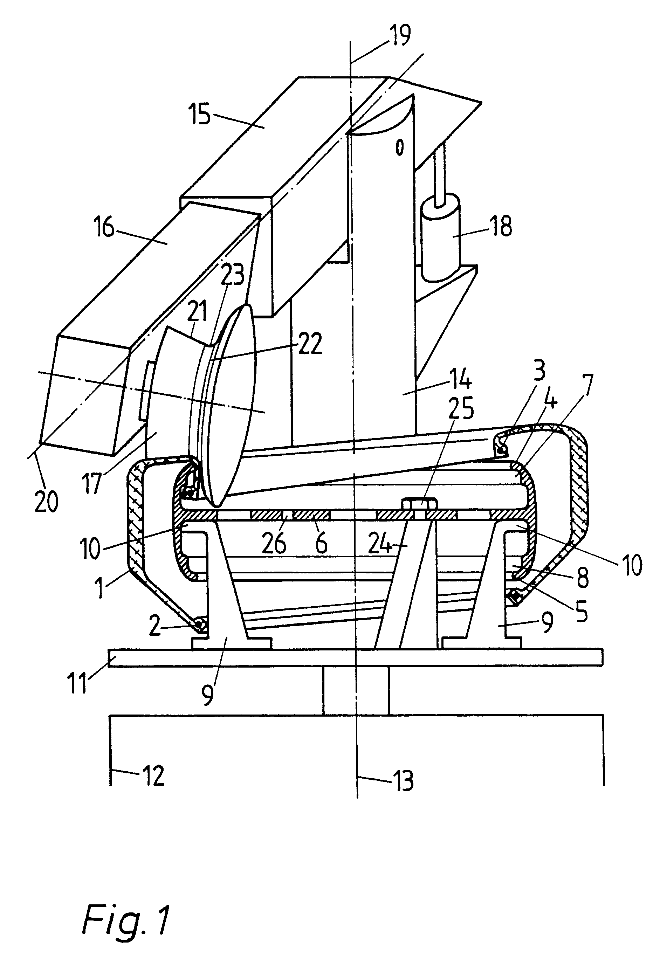

In Figur 1 ist ein Fahrzeugluftreifen 1 dargestellt, der mit seinen umlaufenden Wülsten 2, 3 über Felgenhörner 4, 5 in eine am radial inneren Umfang einer Felge 6 umlaufende Nuten 7, 8 eingebracht werden soll.

Zu Beginn der Montage umschließt der Fahrzeugluftreifen 1 lose die Felge 6.

Die Felge 6 ist mittels mehrerer Spannbacken 9, die an ihrem oberen Ende radial nach außen vorstehende Auskragungen 10 besitzen, fest arretiert. Zur Arretierung werden die Spannbacken 9 in radialer Richtung auf einem Montageteller 11 in nicht dargestellten Führungen solange nach außen bewegt, bis die Auskragungen 10 mit dem inneren Umfang der Felge 6 in Wirkverbindung treten. Da mindestens 3 derartiger Spannbacken 9 gegen den inneren Umfang der Felge 6 in radialer Richtung vorgefahren werden, wird hierdurch gleichzeitig eine feste Zentrierung der Felge 6 erreicht.

Der Montageteller 11 wird von einem nicht dargestellten in einem Gahäuse 12 angeordneten Motor in langsame Rotation um eine Rotationsachse 13 versetzt.

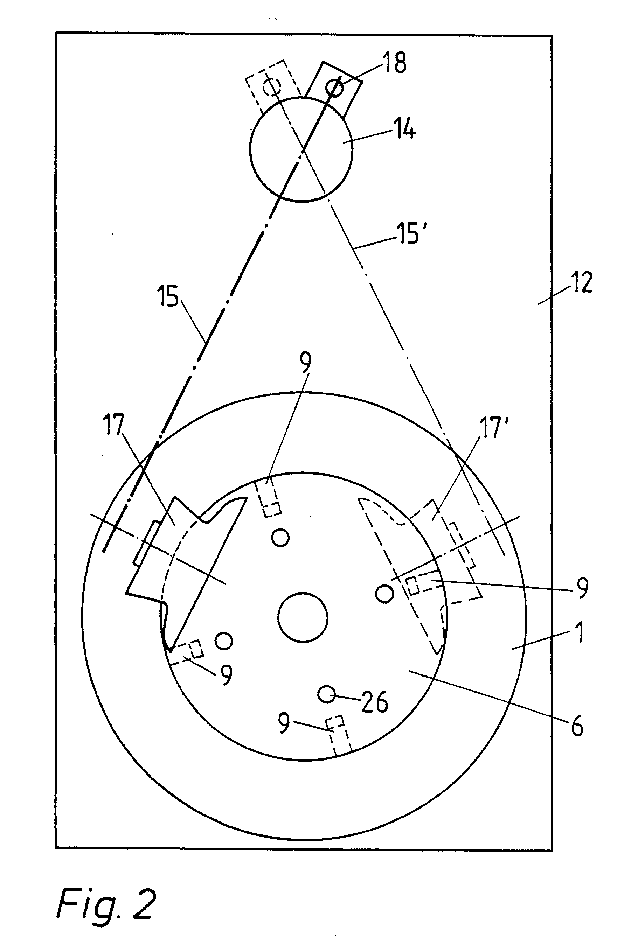

An einer Säule 14, die am Gehäuse 12 angeordnet ist (vgl. auch Figur 2), ist ein Schwenkarm 15 vorgesehen, der an einem drehbaren vorderen Ende 16 eine Führungsrolle 17 trägt. Durch Verschwenken des Schwenkarmes 15 mit Hilfe eines pneumatisch oder hydraulich betätigbaren Zylinderkolbensystems 18, welches an der Säule 14 fest angeordnet ist und andererseits mit dem Ende des Schwenkarms 15 in vertikaler Richtung; wird die Führungsrolle 17 zufolge Drehbarkeit der Säule 14 um eine Drehachse 19 mit einem Wulstbereich des Fahrzeugluftreifens 1 in Wirkverbindung gebracht. Durch Verdrehen des vorderen Endes 16 des Schwenkarms 15 um eine Schwenkarmachse 20 wird die Führungsrolle 17 deren Rotationsachse senkrecht zur Schwenkarmachse 20 verläuft so ausgerichtet, daß eine erste Flanke 21 der Führungsrolle 17 mit dem axialen Teil des Wulstes 3 zusammenwirkt, während eine zweite Flanke 22 mit dem radial inneren Ring des Wulstes 3 zusammenwirkt.

Die erste Flanke 21 ist kegelig ausgebildet, während die zweite Flanke 22 insbesondere im Bereich des Zusammenwirkens mit dem inneren Ring des Wulstes 3 ballig (konvex) ausgebildet ist.

Die in vertikaler Richtung auf die Felge 6 und den Fahrzeugluftreifen 1 wirkende Kraft wird über die erste, die kegelige Flanke 21 der Führungsrolle aufgebracht. Durch Erhöhen des Druckes im Zylinderkolbensystem 18 wird eine bestimmte Vorlast erzeugt, die gleichzeitig auch zur Selbsthaltung

der Führungsrolle 17 dient. Eine derartige Montiervorrichtung benötigt also keine zusätzliche Arretierungshilfe wie es beim Stand der Technik unumgänglich ist.

Zur Montage des Fahrzeugluftreifens 1 auf die Felge 6 wird die Führungsrolle 17 von einem im vorderen Teil 16 des Schwenkarms 15 angeordneten Motor angetrieben. Die Drehrichtung der Führungsrolle 17 ist gleich der Drehrichtung des Montagetellers 11. Lediglich die Drehgeschwindigkeiten von Montageteller 11 und Führungsrolle 17 sind verschieden. Wie bereits ausgeführt, wirkt nunmehr die zweite, die ballige Flanke 22 der Führungsrolle 17 mit dem inneren Rand des Wulstes 3 zusammen. Durch die Differenzgeschwindigkeit zwischen Fahrzeugluftreifen und Führungsrolle wird bereits eine Verkleinerung des Umfangs des Wulstkreises eingeleitet und weiter verstärkt durch die Differenzgeschwindigkeit zwischen der kegeligen Flanke 21 und der balligen Flanke 22. Diese Differenzgeschwindigkeit wird verursacht durch die verschiedenen Berührungsradien der kegeligen Flanke 21 mit dem axialen Wulstteil und der balligen Flanke 22 mit dem radial inneren Ring. Es tritt also ein weiteres Voraufrollen des inneren Rings gegenüber dem Flankenteil des Wulstes auf, was dazu führt, daß der Umfang des Wulstes noch weiter verkleinert wird. Durch die Anordnung einer Kehle 23 zwischen den beiden Flanken 21 und 22 der Führungsrolle 17 wird ein Freiraum geschaffen, in den hinein sich der verkürzte Wulstumfang als elastische Einbeulung ausdehnen kann. Damit wird durch die vertikal wirkende Kraft der Fahrzeugluftreifen 1 über das Felgenhorn 4 bewegt und es kann der Wulst 3 ungehindert durch die am Umfang fortschreitende Einbeulung kontinuierlich in die umlaufende Nut 7 einlaufen.

Nach einer Umdrehung der Felge 6 ist der Fahrzeugluftreifen 1 mit einem Wulst montiert. Durch Wenden der Felge 6 wird in einem zweiten Arbeitsgang auch der Wulst 2 in die Nut 8 eingeführt. Zum Umfang der Erfindung gehört es, daß anstelle einer einzigen Führungsrolle gleichzeitig auch eine zweite Führungsrolle mit dem anderen Wulst zusammenwirkt, wie oben beschrieben, so daß in einem einzigen Arbeitsgang der Reifen durch Einführen des jeweiligen Wulstes in die jeweilige Nut fertig montiert ist.

Bei einer Demontage des Fahrzeugluftreifens 1 von der Felge 6 wird die Führungsrolle 17 ebenfalls im Bereich des Wulstes mit einer bestimmten Vorlast in vertikaler Richtung auf den Fahrzeugluftreifen 1 aufgesetzt. Nach diesem Aufsetzen werden sowohl der Montageteller 11 und die Führungsrolle 17 in gleichsinnige jedoch unterschiedliche Geschwindigkeit aufweisende Rotation versetzt. Hierdurch wird, wie bei der Montage bereits beschrieben, der Wulstring verkleinert, so daß eine elastische Einbeulung verursacht wird. Diese elastische Einbeulung verursacht ein Abheben des Wulstbereichs von der Nut und es kann in diese Abhebung hinein ein Werkzeug zum Demontieren des Fahrzeugluftreifens 1 von der Felge 6 zwischen Felge 6 und Fahrzeugluftreifen 1 eingeführt werden.

Aus der Draufsicht in Figur 2 wird ersichtlich, daß die Anordnung der Säule 14 auf dem Gehäuse 12 außerhalb des größten Raddurchmessers die Möglichkeit bietet, Fahrzeugluftreifen 1 mit verschiedenen Durchmessern auf entsprechende Felgen 6 zu montieren und zu demontieren, ohne daß zusätzliche Halteeinrichtungen für die Führungsrolle 17 während des Montagevorgangs wie bisher üblich vorgesehen werden müssen, da unabhängig von der Reifen- und Felgengröße durch Variierung des in seiner Länge veränderlichen Schwenkarmes 15 ein Schrägstellen der Führungsrolle 17 erreicht wird. Durch diese Schrägstellung tritt mit Hilfe der über das Zylinderkolbensystem 18 aufbringbaren vertikalen Kraft eine Selbstarretierung der Führungsrolle 17 ein. Auch ist in Figur 2 schematisch strichpunktiert, die Anordnung eines zweiten Schwenkarmes 15' mit einer Führungsrolle 17' dargestellt, womit gleichzeitig in einem Arbeitsgang der andere Wulst in die zweite Nut der Felge 6 eingebracht werden kann. Hierzu ist es gegebenenfalls erforderlich in radialer Richtung auf dem Montageteller verschiebbare Halterungen 24 vorzusehen (vgl. die in Figur 1 dargestellte Halterung 24), die mit Schraubbolzen 25 die Felge 6 über Bohrungen 26 für den Montage- und Demontagevorgang fest mit dem Montageteller 11 verankert.

Zufolge Anordnung der Säule 14 außerhalb des Fahrzeugluftreifens 1 am Gehäuse 12 ist es auch möglich, durch Wegschwenken des oder der Arme 15 bzw. 15 mit den Führungsrollen 17 bzw. 17 in einfacher Weise diese Montagevorrichtung für die bisher üblichen Fahrzeugluftreifen verwendungsfähig zu machen, wenn an der Säule 14 schwenkbar eine Montage- und Demontagevorrichtung für derartige Reifen vorgesehen wird.

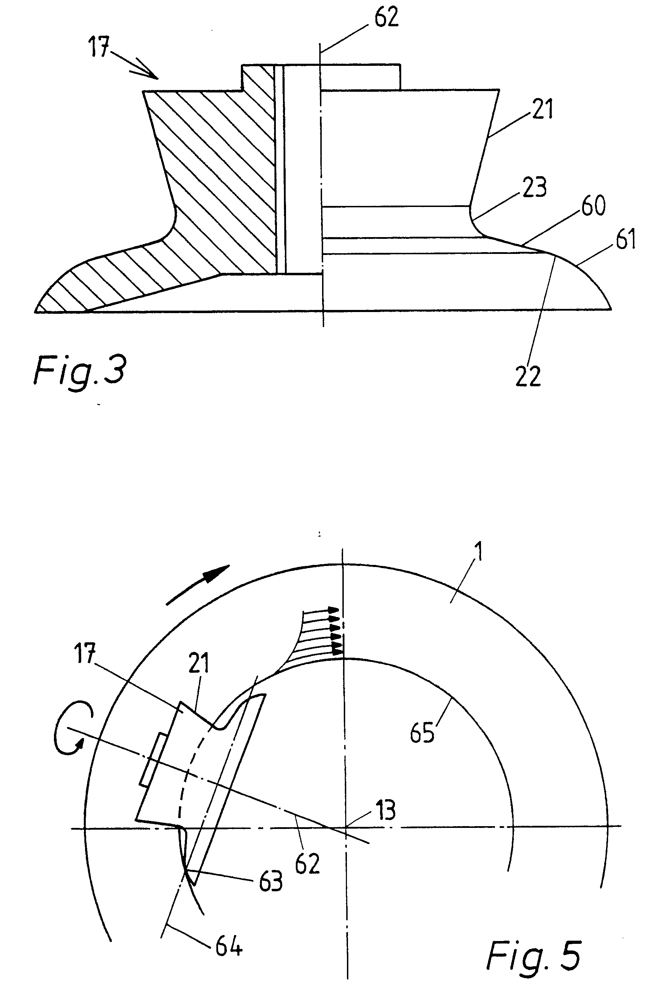

Die in Figur 1 und 2 dargestellte Montagevorrichtung läßt sich sowohl für den Montagebetrieb bei Fertigung von Kraftfahrzeugen einsetzen als auch besonders bevorzugt bei der Montage und Demontage von Fahrzeugluftreifen in Werkstätten. In den Figuren 3 und 5 ist in vergrößertem Maßstab eine Führungsrolle 17 dargestellt und es ist die Sekantenrichtung der Führungsrolle 17 zum Wulstkreis gezeigt.

Gemäß Figur 3 ist die erste Flanke 21 der Führungsrolle 17 konisch ausgebildet und schließt über die Kehle 23 an die zweite Flanke 22 an. Die zweite Flanke 22 besitzt einen konischen Oberflächenteil 60 und einen balligen (konvexen) Oberflächenteil 61. Aus der Figur 3 ist zu erkennen, daß der Öffnungswinkel zwischen dem konischen Teil 60 und dem konischen Teil der ersten Flanke 21 einen Winkel einschließt, der größer 90° ist. Darüberhinaus ist zu erkennen, daß der konvexe Teil 61 der zweiten Flanke einen größeren Abstand von der Achse (Führungsrollenachse) 62 der Führungsrolle 17 hat als die konische Oberfläche der ersten Flanke 21. Damit wird erklärbar, daß allein durch diese Konfiguration ein zusätzlicher Zugeffekt auf den Reifenwulst ausgeübt wird und zwar vom konvexen Teil 61 der zweiten Flanke, da dieser eine größere Umfangsgeschwindigkeit hat als die konische Flanke 21. Durch die Anordnung der Kehle 23 und des konischen Teils 60 wird darüberhinaus ein Freiraum für den elastisch eingebeulten Wulst geschaffen.

Die in Figur 5 dargestellte Anordnung der Führungsrolle 17 zeigt, daß ihre Rollebene 63 im konvexen Teil 61 auf einer Sekante 64 zum Wulstkreis 65 verläuft. Durch gleichsinnige Drehung von Kraftfahrzeugluftreifen 1 und Führungsrolle 17 mit unterschiedlicher Geschwindigkeit wird wie bereits erläutert ein fortschreitender Einbeuleffekt vorbereitet, der dann wie oben zu Figur 3 näher erläutert durch die verschiedenen Umfangsgeschwindigkeiten von konvexem Teil und konischem Teil noch verstärkt werden. Darüberhinaus bewirkt diese Sekantenstellung beim Aufbringen der vertikalen Vorlast über das Zylinderkolbensystem 18 auf den Wulstbereich des Fahrzeugluftreifens 1 über die erste Flanke 21 einen Selbsthalteeffekt der Führungsrolle 17. Wie bereits ausgeführt ist eine zusätzliche Halterung der Führungsrolle 17 in radialer Richtung nicht erforderlich, da die Führungsrollenachse 62 nicht in Richtung des Zentrums 13 (vgl. Fig. 5) weist.

Die Verwendung der Führungsrolle gemäß Figur 6 bietet sich besonders dann an, wenn der Flankenteil des Reifens herstellungsbedingt eine besonders große Steife besitzt oder eine Lage zur Laufsohle des Reifens einnimmt, die einen Winkel zwischen Flanke und Laufsohle ergibt, der zwischen 90° und 180° liegt.

Die ballige Ausgestaltung der ersten Flanke 70 verstärkt das Heranziehen der Flanke des Reifens, ohne daß eine Verminderung des Einbeuleffektes, hervorgerufen durch den konvexen Teil 61 in Verbindung mit der ersten Flanke 70, bei gegebenem Freiraum durch die Kehle 23 und den Kegelstumpf 60 auftritt. Darüber hinaus wird durch die erste Flanke 70 eine Erhöhung der vertikalen Kraft erreicht.

## Ansprüche

1. Verfahren zur Montage oder Demontage eines Fahrzeugluftreifens (1), dessen Wülste (2.3) sich im montierten Zustand am radial inneren Umfang einer Felge (6) befinden, dadurch gekennzeichnet, daß ohne zusätzliche Arretierung während der Montage oder zumindest zu Beginn der Demontage durch eine im wesentlichen in Richtung einer den Wulstkreis schneidenden Linie (Sekante 64) wirkenden Kraft, eine Verkleinerung des jeweiligen Wulstdurchmessers durch elastisches Einbeulen des Wulstdurchmessers bewirkt wird.

2. Verfahren nach Anspruch 1 dadurch gekennzeichnet, daß die Kraft mit einer Geschwindigkeit am Wulstumfang entlanggeführt wird, die verschieden von einer Bewegung von Felge (6) und Fahrzeugluftreifens (1) ist.

3. Vorrichtung zur Durchführung des Verfahrens nach Anspruch 1 und/ oder 2 zur Montage eines Fahrzeugluftreifens (1) mit Wülsten (2,3) auf eine mit einem drehbaren Montageteller (11) verbundenen Felge (6), wobei der Fahrzeugluftreifen (1) die Felge (6) lose umschließt und wobei während der Montage eine an einem Arm angeordnete drehbare Rolle mit dem Wulst der einen Reifenseite in Wirkverbindung bringbar ist und der Arm sich an einer Säule abstützt und bei der mindestens der Montageteller (11) angetrieben wird, wobei eine Führungsrolle (17) (Fig. 3) mit zwei Flanken (21,22) vorgesehen ist, deren erste Flanke (21) als Kegelstumpf ausgebildet ist, dessen Achse mit der Achse (62) der Führungsrolle zusammenfällt und dessen Ursprung in Richtung der zweiten Flanke (22) liegt, dadurch gekennzeichnet, daß die zweite Flanke mit einer Kehlung (23) an die erste Flanke (21) anschließt, daß die zweite Flanke im weiteren Verlauf ballig (konvex) (61) ausgebildet ist, daß der ballige Bereich (61) mit dem radial inneren Ring des Wulstes (2 bzw. 3) zusammenwirkt, daß der Kegelstumpf mit dem axialen Teil des Reifenwulstes (2 bzw. 3) zusammenwirkt, daß die Führungsrolle (17) an einem drehbaren Arm (15,16) angeordnet ist, der sich an einer außerhalb des Drehkreises des zu montierenden Reifens (1) befestigten Säule (14) in vertikaler und horizontaler Richtung schwenkbar und in vertikaler Richtung mit vorgebbarer Kraft (18) arretierbar abstützt, daß der drehbare Montageteller (11) und die Führungsrolle (17) gleichsinnig mit einer Differenzgeschwindigkeit umlaufen, je einen Antrieb besitzen und daß eine auf der Führungsrollenachse (62) senkrecht stehende Rollebene (63) im Bereich des balligen Teils (61) der Führungsrolle (17), eine Sekantenrichtung (64) zum Wulstkreis einnimmt.

4. Vorrichtung nach Anspruch 3 dadurch gekennzeichnet, daß zwischen Kehlung (23) und balligem Bereich (61) der zweiten Flanke (22) die Oberfläche als Kegelstumpf (60) ausgebildet ist, dessen Achse gleich ist der Führungsrollenachse (62), dessen Ursprung in Richtung der ersten Flanke (21) weist und daß der Öffnungswinkel zwischen beiden Kegelstümpfen größer 90° ist.

5. Vorrichtung zur Durchführung des Verfahrens nach Anspruch 1 und/ oder 2 zur Montage eines Fahrzeugluftreifens (1) mit Wülsten (2,3) auf eine mit einem drehbaren Montageteller (11) verbundenen Felge (6), wobei der Fahrzeugluftreifen (1) die Felge (6) lose umschließt und wobei während der Montage eine an einem Arm angeordnete drehbare Rolle mit dem Wulst der einen Reifenseite in Wirkverbindung bringbar ist und der Arm sich an einer Säule abstützt und bei der mindestens der Montageteller (11) angetrieben wird, wobei eine Führungsrolle (17) (Fig. 6) mit zwei Flanken (70,22) vorgesehen ist dadurch gekennzeichnet, daß die erste Flanke (70) ballig (konvex) entlang der Führungsrollenachse(62) ausgebildet ist, daß die zweite Flanke über eine Kehlung (23) und einen Kegelstumpf (60), dessen Achse mit der Führungsrollenachse (62) zusammenfällt und dessen Ursprung in Richtung der ersten Flanke (70) weist, an die erste Flanke (70) anschließt, daß die zweite Flanke im weiteren Verlauf ballig (konvex) (61) ausgebildet ist, daß der ballige Bereich (61) mit dem radialinneren Ring des Wulstes (2 bzw. 3) zusammenwirkt, daß der Kegelstumpf mit dem axialen Teil des Reifenwulstes (2 bzw. 3) zusammenwirkt, daß die Führungsrolle (17) an einem drehbaren Arm (15,16) angeordnet ist, der sich an einer außerhalb des Drehkreises des zu montierenden Reifens (1) befestigten Säule (14), in vertikaler und horizontaler Richtung schwenkbar und in vertikaler Richtung mit vorgebbarer Kraft (18) arretierbar abstützt, daß der drehbare Montageteller (11) und die Führungsrolle (17) gleichsinnig mit einer Differenzgeschwindigkeit umlaufen je einen Antrieb besitzen und daß eine auf der Führungsrollenachse (62) senkrecht stehende Rollebene (63) im Bereich des balligen Teils (61) der Führungsrolle (17) eine Sekantenrichtung (64) zum Wulstkreis einnimmt.

6. Vorrichtung nach einem der Ansprüche 3 bis 5 dadurch gekennzeichnet, daß die Führungsrollenachse (62) und die Schwenkachse (20) senkrecht aufeinander stehen.

7. Vorrichtung nach einem der vorhergehenden Ansprüche 3 bis 6 dadurch gekennzeichnet, daß an der Säule (14) eine hydraulische oder pneumatische Einrichtung (18) vorgesehen ist, welche die vertikale Verschwenkung des Arms (15,16) und der Führungsrolle (17) und deren Halterung mit einer bestimmten Vorlast in vertikaler Richtung am Reifenwulst bewirkt.

8. Vorrichtung nach einem der vorhergehenden Ansprüche 3 bis 7 dadurch gekennzeichnet, daß der Montageteller (11) mehrere Spannbakken (9) oder Halterungen (24) zur Arretierung der Fahrzeugfelge (6) bezitzen.

9. Vorrichtung nach Anspruch 9 dadurch gekennzeichnet, daß die Spannbacken (9) an ihren oberen Enden radial nach außen vorstehende Auskragungen (10) besitzen, deren radiale Erstreckung größer als die Wulstdicke des Kraftfahrzeugluftreifens (1) in axialer Richtung ist.

## Claims

1. A method of fitting or removing a pneumatic vehicle tyre (1), the beads (2,3) of which are located at the inner radial periphery of a wheel rim (6) in the fitted state, **characterised in that** without additional locking during fitting or at least at the beginning of removal there is effected a reduction in the respective bead diameter through resilient bulging of the bead diameter due to a force acting essentially in the direction of a line (secant 64) which intersects the bead circle.

2. A method according to claim 1, **characterised in that** the force is directed along the periphery of the bead at a speed which is different from a movement of the rim (6) and the pneumatic vehicle tyre (1).

3. A device for carrying out the method according to claim 1 and/or 2 for fitting a pneumatic vehicle tyre (1) with beads (2,3) on to a wheel rim (6) which is connected to a rotatable fitting plate (11), in which the pneumatic vehicle tyre (1) loosely surrounds the rim (6) and in which during fitting a rotatable roller arranged on an arm may be brought into operative connection with the bead of one side of the tyre and the arm is supported on a column and in which at least the fitting plate (11) is driven, in which a guide roller (17) (Fig. 3) is provided with two flanks (21, 22), the first flank (21) of which is formed as a truncated cone, its axis coinciding with the axis (62) of the guide roller and its origin lying in the direction of the second flank (22), **characterised in that** the second flank is connected to the first flank (21) via a groove (23), that the second flank is cambered (convex) (61) in the rest of its shape, that the cambered region (61) cooperates with the inner radial annulus of the bead (2 or 3 respectively), that the truncated cone cooperates with the axial part of the tyre bead (2 or 3 respectively), that the guide roller (17) is arranged on a rotatable arm (15,16) which is supported on a column (14) fixed outside the rotating circle of the tyre (1) to be fitted, and is pivotal in a vertical and horizontal direction and lockable in a vertical direction with a predeterminable force (18), that the rotatable fitting plate (11) and the guide roller (17) rotate in the same sense at a differential speed, each has a drive and that a roll plane (63) perpendicular to the guide roller axis (62) in the region of the cambered part (61) of the guide roller (17) takes up a secant direction (64) with respect to the bead circle.

4. A device according to claim 3 **characterised in that** between the groove (23) and the cambered region (61) of the second flank (22) the surface is formed as a truncated cone (60), with the same axis as the guide roller axis (62), its origin pointing in the direction of the first flank (21) and that the angle between both truncated cones is greater than 90 degrees.

5. A device for carrying out the method according to claim 1 and or 2 for fitting a pneumatic vehicle tyre (1) having beads (2,3) on to a wheel rim (6) connected to a rotatable fitting plate (11), in which the pneumatic vehicle tyre (1) loosely surrounds the rim (6) and in which during fitting a rotatable roller arranged on an arm may be brought into operative connection with the bead of one side of the tyre and the arm is supported on a column and in which at least the fitting plate (11) is driven, in which a guide roller (17) (Fig. 6) is provided with two flanks (70,22) **characterised in that** the first flank (70) is cambered (convex) along the guide roller axis (62), that the second flank 5 connected to the first flank (70) via a groove (23) and a truncated cone (60), the axis of which coincides with the guide roller axis (62) and the origin of which points in the direction of the first flank (70), that the second flank is cambered (convex) (61) in the rest of its shape, that the cambered region (61) cooperates with the inner radial annulus of the bead (2 or 3 respectively), that the truncated cone cooperates with the axial part of the tyre bead (2 or 3 respectively), that the guide roller (17) is arranged on a rotatable arm (15,16) which is supported on a column (14) fixed outside the rotating circle of the tyre (1) to be fitted and pivotal in a vertical and horizontal direction and lockable in a vertical direction with predeterminable force (18), that the rotatable fitting plate (11) and the guide roller (17) rotate in the same sense at a differential speed and each has a drive and that a roll plane (63) perpendicular to the guide roller axis (62) in the region of the cambered part (61) of the guide roller (17) takes up a secant direction (64) with respect to the bead circle.

6. A device according to any one of claims 3 to 5, **characterised in that** the guide roller axis (62) and the pivot axis (2) are perpendicular to each other.

7. A device according to any one of the preceding claims 3 to 6, **characterised in that** an hydraulic or pneumatic arrangement (18) is provided on the column (14), which effects vertical pivoting of the arm (15,16) and the guide roller (I7) and of the mounting thereof with a defined initial loading in a vertical direction on the tyre bead.

8. A device according to any one of the preceding claims 3 to 7, characterised in that. the fitting plate (11) had several clamping jaws (9) or mountings (24) for locking the vehicle wheel rim (6).

9. A device according to claim 9 **characterised in that** the clamping jaws (9) have radially outwardly projecting jutting portions (10) at their upper ends, whose radial expanse is greater than the bead thickness of the pneumatic motor vehicle tyre (1) in an axial direction.

## Revendications

1. Procédé pour monter ou démonter un bandage pneumatique de véhicule (1), dont des bourrelets (2,3) se trouvent, en position assemblée, sur le périmètre radial intérieur d'une jante (6), caractérisé en ce qu'une réduction du diamètre de bourrelet respectif est provoquée, pendant le montage ou au moins au début du démontage, au moyen du gauchissement élastique du diamètre du bourrelet, sans aucun dispositif d'arrêt additionnel , grâce à une force agissant essentiellement selon une ligne (sécante 64) coupant le cercle de bourrelet.

2. Procédé selon la revendication 1, caractérisé en ce que la force est déplacée tout le long du périmètre du bourrelet, avec une vitesse différente, grâce à un mouvement de la jante (6) et du bandage pneumatique de véhicule (1).

3. Dispositif de mise en oeuvre du procédé selon la revendication 1 et/ou 2, pour monter un bandage pneumatique de véhicule (1), comprenant des bourrelets (2,3), sur une jante (6) reliée à un plateau de montage (11) rotatif, dans lequel le bandage pneumatique de véhicule (1) entoure avec du jeu la jante (6), et dans lequel , pendant le montage, un galet rotatif disposé sur un bras est susceptible d'être amené en liaison fonctionnelle avec le bourrelet d'un côté du bandage, le bras prenant appui sur une colonne, et dans lequel au moins le plateau de montage (11) est entraîné, dispositif dans lequel un galet de guidage (17) (Fig. 3) est prévu avec deux flancs (21,22), le premier flanc (21) étant réalisé sous la forme d'un tronc de cône dont l'axe coïncide avec l'axe (62) du galet de guidage et dont l'origine est orienté dans la direction du deuxième flanc (22), caractérisé en ce que le deuxième flanc se raccorde à une gorge (23) située sur le premier flanc (21), que le deuxième flanc est réalisé en outre de manière bombée (convexe) (61), la zone bombée (61) coopérant avec l'anneau intérieur radial du bourrelet (2, respectivement 3), que le galet de guidage (17) est disposé sur un bras rotatif (15,16), qui est pivotant en direction verticale et horizontale sur une colonne (14) fixée au-dehors du cercle de rotation du bandage (1) à monter, et prend appui de manière blocable en direction verticale avec une force (18) pouvant être prédéterminée, que le plateau de montage rotatif (11) et le galet de guidage (17) tournent dans le même sens avec une vitesse différente, qu' ils présentent chacun un entraînement, et un plan de galet (63) situé perpendiculairement à l'axe du galet de guidage (62), dans la zone de la partie bombée (61) du galet de guidage (17), prenant une direction de sécante (64) par rapport au cercle du bourrelet.

4. Dispositif selon la revendication 3, caractérisé en ce qu'entre la gorge (23) et la zone bombée (61) du deuxième flanc (22), la surface est réalisée en forme de tronc de cône (60), dont l'axe est le même que l'axe du galet de guidage (62), dont l'origine est tournée en direction du premier flanc (21) et que l'angle d'ouverture entre les deux troncs de cône est supérieur à 90°.

5. Dispositif pour la mise en oeuvre de la méthode selon la revendication 1 et/ou 2 pour monter un bandage pneumatique de véhicule (1) comportant des bourrelets (2,3) sur une jante (6) reliée à un plateau de montage (11) rotatif, dans lequel le bandage pneumatique de véhicule (1) entoure avec du jeu la jante (6) et dans lequel , pendant le montage, un galet rotatif disposé sur un bras est susceptible d'être amené en liaison fonctionnelle avec le bourrelet d'un côté du bandage, et le bras prenant appui sur une colonne, et dans lequel au moins le plateau de montage (11) est entraîné, un galet de guidage (17) (Fig. 6) étant prévu avec deux flancs (70,22), caractérisé en ce que le premier flanc (70) est de forme bombée (convexe) le long de l'axe du galet de guidage (62), que le deuxième flanc se raccordant au premier flanc (70) par l'intermédiaire d'une gorge (23) et d'un tronc de cône (60), dont l'axe coïncide avec l'axe du galet de guidage (62) et dont l'origine est tourné en direction du premier flanc (70), le deuxième flanc étant réalisé en outre de manière bombée (convexe) (61), la zone bombée (61) coopérant avec l'anneau intérieur radial du bourrelet (2 respectivement 3), le tronc de cône coopérant avec la partie axiale du bourrelet de bandage (2 respectivement 3), le galet de guidage (17) étant disposé sur un bras rotatif (15,16), qui est pivotant en direction verticale et horizontale sur une colonne fixée (14) au-dehors du cercle de rotation du pneumatique (1) à monter, et prend appui de manière blocable en direction verticale avec une force (18) pouvant être prédéterminée, que le plateau de montage rotatif (11) et le galet de guidage (17) tournent dans le même sens avec une vitesse différente, qu'ils présentent chacun un entraînement, et un plan de galet (63) situé perpendiculairement à l'axe du galet de guidage (62), dans la zone de la partie bombée (61) du galet de guidage (17), prenant une direction de sécante (64) par rapport au cercle du bourrelet.

6. Dispositif selon l'une des revendications 3 à 5, caractérisé en ce que l'axe de galet de guidage (62) et l'axe de pivotement (20) sont perpendiculaires.

7. Dispositif selon l'une des revendications précédentes 3 à 6, caractérisé en ce que, sur la colonne (14), est prévu un dispositif (18) hydraulique ou pneumatique, qui provoque le pivotement vertical du bras (15,16) et du galet de guidage (17) et leur maintien, avec une précharge déterminée, en direction verticale, sur le bourrelet de bandage.

8. Dispositif selon l'une des revendications précédentes 3 à 7, caractérisé en ce que le plateau de montage (11) présente plusieurs mâchoires de serrage (9) ou fixations (24) pour bloquer la jante de véhicule (6).

9. Dispositif selon la revendication 8. caractérisé en ce que les mâchoires de serrage (9) présentent sur leurs extrémités supérieures des saillies qui dépassent radialement vers l'extérieur, dont l'étendue radiale est supérieure à l'épaisseur du bourrelet du bandage pneumatique de véhicule (1) dans la direction axiale

Fig.1

Fig. 2

Fig.3

Fig. 5

Fig. 4